# EUROPÄISCHE PATENTSCHRIFT

(11) **EP 1 989 458 B1**
(45) Veröffentlichungstag und Bekanntmachung des Hinweises auf die Patenterteilung: **04.04.2012**
(21) Anmeldenummer: 07702399.2
(22) Anmeldetag: 31.01.2007
(51) Int. Cl.: F16D 13/58, F16D 21/06

(54) **KUPPLUNGSGEHÄUSE MIT BREITEN ARRETIERUNGSSCHLITZEN FÜR EINE HEBELFEDER UND KUPPLUNGSGEHÄUSE MIT AXIAL VERSETZTEN ZUNGEN**
CLUTCH HOUSING WITH WIDE LOCKING SLOTS FOR A LEVER SPRING AND CLUTCH HOUSING WITH AXIALLY OFF-SET TONGUES
CARTER D'EMBRAYAGE DOTÉ DE LARGES FENTES D'ARRÊT POUR UN RESSORT LEVIER ET CARTER D'EMBRAYAGE DOTÉ DE LANGUETTES À DÉCALAGE AXIAL

(30) Priorität: 22.02.2006 US 775620 P
(43) Veröffentlichungstag der Anmeldung: 12.11.2008
(73) Patentinhaber: Schaeffler Technologies AG & Co. KG, 91074 Herzogenaurach (DE)
(72) Erfinder: UHLER, Adam, 44276 Sterling, OH (US)
(86) Internationale Anmeldenummer: PCT/DE2007/000168
(87) Internationale Veröffentlichungsnummer: WO 2007/095882

(56) Entgegenhaltungen:
- DE-A1- 10 241 513
- DE-A1- 19 941 837
- DE-A1-102005 027 610
- FR-A1- 2 851 626

## Beschreibung

### GEBIET DER ERFINDUNG

Die Erfindung betrifft Verbesserungen an einer Vorrichtung zur Übertragung einer Kraft zwischen einer rotatorischen Antriebseinheit (zum Beispiel dem Motor eines Motorfahrzeugs) und einer rotatorisch angetriebenen Einheit (zum Beispiel dem Automatikgetriebe in dem Motorfahrzeug). Insbesondere betrifft die Erfindung eine Kupplungsbaugruppe mit einem Kupplungsgehäuse mit breiten Schlitzen zum Arretieren einer Hebelfeder und einem Kupplungsgehäuse mit axial versetzten Zungen, die so angeordnet sind, dass sie eine Feder vorspannen.

Aus der Offenlegungsschrift FR 2 851 626 A1 ist eine Kupplungsbaugruppe mit einem inneren und einem äußeren Kupplungsgehäuse gemäß dem Oberbegriff des Patentanspruchs 1 bekannt. Auch das Dokument DE 102 41 513 A1 offenbart eine Doppelkupplungsbaugruppe mit einem topfförmigen Kupplungsgehäuse.

### HINTERGRUND DER ERFINDUNG

In der US 2005/0139442, eingereicht am 23. Dezember 2004 und veröffentlicht am 30. Juni 2005, wird die Verwendung von Hebelfedern in einer mechanisch betätigten Kupplungsbaugruppe gezeigt. Eine Kupplungsbaugruppe könnte verbessert werden, wenn Federn vorgespannt wären.

Somit besteht seit langem ein Bedarf an einem Gehäuse mit breiteren Federschlitzen und einem verbesserten Verfahren zum Vorspannen einer Feder.

### KURZE ZUSAMMENFASSUNG DER ERFINDUNG

Die vorliegende Erfindung umfasst im Allgemeinen eine Kupplungsbaugruppe, die ein inneres Kupplungsgehäuse mit ersten und zweiten Vorsprüngen, die in radialer Richtung aus einer im Wesentlichen zylindrischen inneren Gehäusewand herausragen und in axialer Richtung gegeneinander versetzt sind, sowie ein äußeres Kupplungsgehäuse mit einer Vielzahl von Öffnungen in einer im Wesentlichen zylindrischen äußeren Gehäusewand beinhaltet. Die ersten und zweiten Vorsprünge werden zumindest teilweise mit der Vielzahl der Öffnungen gekoppelt.

Gemäß einigen Aspekten beinhaltet die Baugruppe eine Hebelfeder, die in die Vielzahl der Öffnungen eingreift, die Vielzahl der Öffnungen beinhaltet entsprechende erste Kanten, und der erste Vorsprung drückt die Feder gegen die ersten Kanten. Ferner ist der erste Vorsprung so angeordnet, dass er die Hebelfeder vorspannt. Gemäß einigen Aspekten ist der erste Vorsprung so angeordnet, dass er ein Drehmoment vom äußeren Kupplungsgehäuse aufnimmt. Gemäß einigen Aspekten beinhaltet die Vielzahl der Öffnungen entsprechende zweite Kanten, und der zweite Vorsprung ist so angeordnet, dass er die zweiten Kanten berührt. Ferner ist das äußere Kupplungsgehäuse so angeordnet, dass es ein Drehmoment aufnimmt, und der zweite Vorsprung ist so angeordnet, dass er das Drehmoment vom äußeren Kupplungsgehäuse aufnimmt und das innere Kupplungsgehäuse in einer axialen Richtung stützt. Gemäß einigen Aspekten beinhaltet das innere Kupplungsgehäuse ein längsgerichtetes Ende, und als erste und zweite Vorsprünge dienen erste bzw. zweite Zungen, die in der Nähe des längsgerichteten Endes angeordnet sind. Gemäß einigen Aspekten sind die ersten und zweiten Vorsprünge Teil entsprechender größerer Anzahlen von Vorsprüngen.

Eine allgemeine Aufgabe der vorliegenden Erfindung besteht darin, eine Kupplungsbaugruppe bereitzustellen, die unter Verwendung eines stabileren Stanzstempels, insbesondere zur Bildung der Öffnungen auf dem Umfang, gebildet werden kann.

Eine weitere Aufgabe der vorliegenden Erfindung besteht darin, eine Kupplungsbaugruppe mit einem Kupplungsgehäuse bereitzustellen, das so angeordnet ist, dass es eine Hebelfeder vorspannt.

Diese sowie weitere Aufgaben und Vorteile der vorliegenden Erfindung werden aus der folgenden Beschreibung bevorzugter Ausführungsarten der Erfindung und aus den beiliegenden Zeichnungen und Ansprüchen klar.

### KURZBESCHREIBUNG DER ZEICHNUNGEN

Im Folgenden werden das Wesen und die Funktionsweise der vorliegenden Erfindung in der folgenden detaillierten Beschreibung der Erfindung in Verbindung mit den beiliegenden Figuren ausführlich beschrieben, wobei:
Fig. 1 eine perspektivische Rückansicht eines Kupplungsgehäuses mit Federarretierungsöffnungen gemäß der vorliegenden Erfindung ist;
Fig. 2 eine Seitenansicht des Gehäuses von Fig. 1 ist;
Fig. 3 eine perspektivische Rückansicht eines Kupplungsgehäuses mit radialen Vorsprüngen gemäß der vorliegenden Erfindung ist;
Fig. 4 eine Seitenansicht des Gehäuses von Fig. 3 ist;
Fig. 4A eine Teilseitenansicht eines Kupplungsgehäuses gemäß der vorliegenden Erfindung ist, das eine andere Ausrichtung der Vorsprünge zeigt;
Fig. 5 eine Rückansicht einer Doppelkupplungsbaugruppe gemäß der vorliegenden Erfindung in Explosionsdarstellung ist;
Fig. 6 eine Seitenansicht der Baugruppe von Fig. 5 ist;
Fig. 7 eine Rückansicht der Baugruppe von Fig. 5 ist;
Fig. 8 eine Querschnittsansicht der Baugruppe von Fig. 5 entlang der Schnittlinie 8-8 in Fig. 7 ist;
Fig. 9 ein Detail des Bereichs 9 in Fig. 8 ist;
Fig. 10 ein Detail des Bereichs 10 in Fig. 8 ist; und
Fig. 11 ein Detail des Bereichs 11 in Fig. 6 ist.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung unter Bezug auf die gegenwärtig als bevorzugt angesehenen Aspekte beschrieben wird, sollte klar sein, dass die beanspruchte Erfindung nicht auf die dargelegten Aspekte beschränkt ist.

Außerdem sollte klar sein, dass diese Erfindung nicht auf die beschriebenen bestimmten Verfahren, Materialien und Modifikationen beschränkt ist und insofern natürlich variieren kann. Ferner sollte klar sein, dass die hier verwendete Terminologie lediglich der Beschreibung bestimmter Aspekte dient und nicht als Einschränkung des Geltungsbereichs der vorliegenden Erfindung zu verstehen ist, der nur durch die angehängten Ansprüche beschränkt wird.

Wenn nicht anders erwähnt, haben alle hier verwendeten technischen und wissenschaftlichen Begriffe dieselbe Bedeutung, wie sie einem Fachmann geläufig sind, an den diese Erfindung gerichtet ist. Obwohl zur Ausführung oder zum Testen der Erfindung beliebige Verfahren, Vorrichtungen oder Materialien verwendet werden können, die den hier beschriebenen ähnlich oder gleichwertig sind, werden im Folgenden die bevorzugten Verfahren, Vorrichtungen und Materialien beschrieben. In den unten angegebenen Figuren wird als Vorderseite die einem Motor, mit dem eine Kupplungsbaugruppe verbunden ist, zugewandte Seite bezeichnet. Es sollte klar sein, dass als Vorderseite die einem Getriebe, mit dem eine Kupplungsbaugruppe verbunden ist, zugewandte Seite bezeichnet wird.

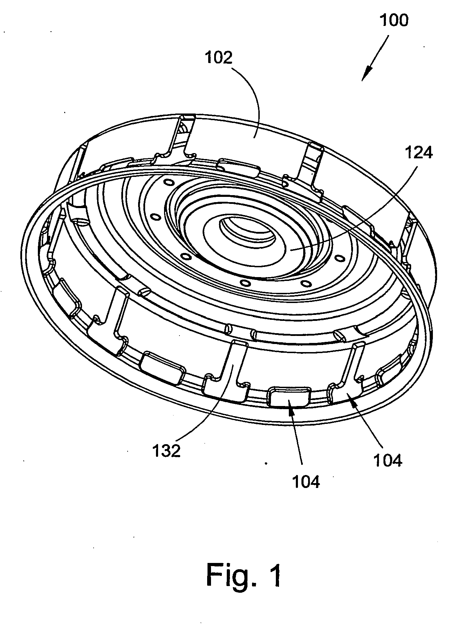

Fig. 1 ist eine perspektivische Rückansicht eines Kupplungsgehäuses 100 einer Kupplungsbaugruppe mit Federarretierungsöffnungen gemäß der vorliegenden Erfindung.

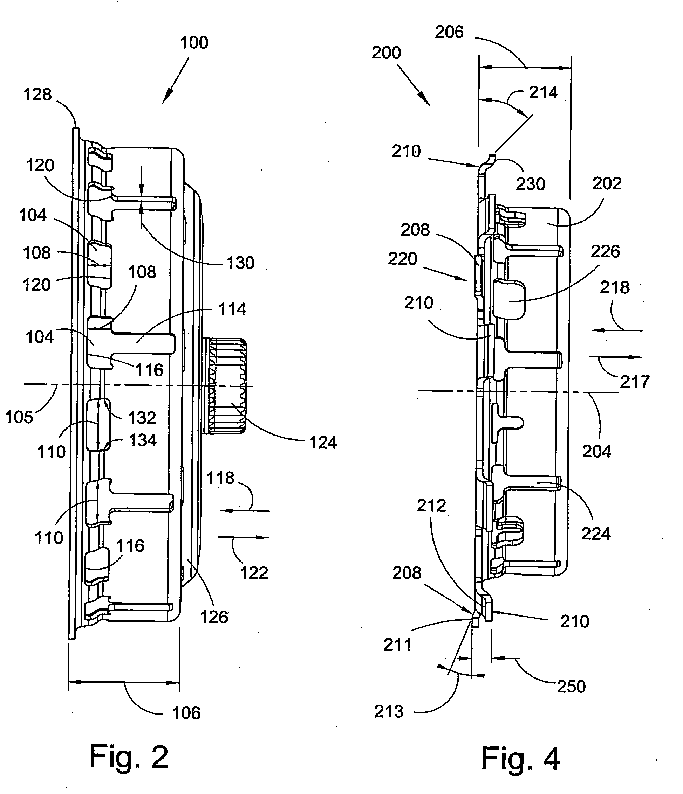

Fig. 2 ist eine Seitenansicht des Kupplungsgehäuses 100. Die folgende Beschreibung ist in Verbindung mit den Figuren 1 und 2 zu sehen. Das Kupplungsgehäuse 100 beinhaltet eine Gehäusewand 102, Öffnungen 104 in der Wand 102 und eine Längsachse 105. Die Wand 102 ist auf einem Umfang um die Achse 105 herum angeordnet. Das heißt, die Wand 102 weist im Allgemeinen eine zylindrische Form auf. Es sollte jedoch klar sein, dass die Wand 102 nicht auf die in den Figuren gezeigte Form beschränkt ist und dass in Geist und Geltungsbereich der beanspruchten Erfindung andere Formen für die Wand 102 enthalten sind. Zum Beispiel ist die Wand 102 nicht auf eine bestimmte Höhe 106 beschränkt.

Die Öffnungen 104 sind nicht auf die in den Figuren gezeigte Form beschränkt. Es sind andere Formen für die Öffnungen 104 möglich und in Geist und Geltungsbereich der beanspruchten Erfindung enthalten. Zum Beispiel können die Breite 108 und die Länge 110 der Öffnungen 104 variiert werden. Gemäß einigen Aspekten kommen als Öffnungen 104 Schlitze infrage, die über den Umfang hinweg auf die Wand 102 ausgerichtet sind. Das heißt, die Länge 110 ist größer als die Breite 108, und die Länge ist auf einen Umfang des Gehäuses ausgerichtet. Ferner ist das Gehäuse 100 nicht auf die Anzahl der gezeigten Öffnungen 104 beschränkt. Gemäß einigen Aspekten beinhalten mindestens einige der Öffnungen 104 eine Erweiterung 114. Das Gehäuse 100 ist nicht auf ein bestimmtes Verhältnis der Öffnungen 104 mit oder ohne Erweiterung 114 beschränkt. Das Gehäuse 100 ist auch nicht auf eine bestimmte Form oder Größer der Erweiterung 114 beschränkt.

Wie im Folgenden gezeigt wird, sind die Öffnungen 104 funktionell so angeordnet, dass sie mindestens einen Teil einer (nicht gezeigten) Hebelfeder für eine (nicht gezeigte) Kupplungsbaugruppe und mindestens einen Teil eines Vorsprungs für ein (nicht gezeigtes) Drehmomentübertragungselement in der Baugruppe aufnehmen. Gemäß einigen Aspekten dient ein inneres Kupplungsgehäuse als Drehmomentübertragungselement. Die Öffnungen 104 beinhalten erste oder hintere Kanten 116, und mindestens ein Teil der Hebelfeder ist so angeordnet, dass er die hintere Kante berührt. Gemäß einigen Aspekten ist mindestens ein Teil des Vorsprungs so angeordnet, dass er den mindestens einen Teil der Hebelfeder berührt. Gemäß einigen Aspekten ist der mindestens eine Teil des Vorsprungs so angeordnet, dass er die Hebelfeder vorspannt. Gemäß einigen Aspekten ist das Gehäuse 100 so angeordnet, dass es ein Drehmoment aufnimmt und das Drehmoment zu mindestens einem Teil des Vorsprungs überträgt.

Die Öffnungen 104 definieren auch zweite oder Vorderkanten 120. Mindestens ein Teil des Vorsprungs ist so angeordnet, dass er die Vorderkante berührt. Gemäß einigen Aspekten ist das Gehäuse 100 so angeordnet, dass es ein Drehmoment aufnimmt und das Drehmoment an mindestens einen Teil des Vorsprungs überträgt, und der mindestens eine Teil des Vorsprungs ist so angeordnet, dass er das Gehäuse in axialer Richtung 122 stützt.

Gemäß einigen Aspekten beinhaltet das Gehäuse 100 eine Nabe 124. Eine Endwand 126 ragt bis zur Nabe 124 und wird gemäß einigen Aspekten unter Verwendung von Pressnieten (extrudierten Nieten), einem relativ kostengünstigen Prozess, mit der Nabe verbunden. Es sollte jedoch klar sein, dass zur Befestigung der Endwand 126 an der Nabe 124 andere Befestigungsverfahren, zum Beispiel separate Niete oder mechanische Befestigungselemente oder Schweißen, verwendet werden können.

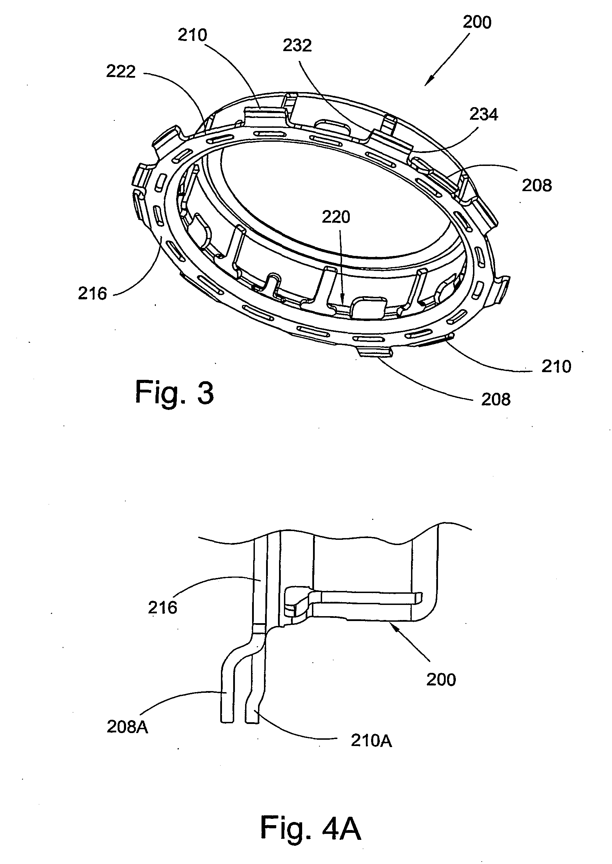

Fig. 3 ist eine perspektivische Rückansicht des Kupplungsgehäuses 200 mit radialen Vorsprüngen gemäß der vorliegenden Erfindung.

Fig. 4 ist eine Seitenansicht des Gehäuses 200 von Fig. 3. Die folgende Beschreibung ist in Verbindung mit den Figuren 3 und 4 zu sehen. Das Kupplungsgehäuse 200 beinhaltet eine Gehäusewand 202 und eine Längsachse 204. Die Wand 202 ist über den Umfang hinweg um die Achse 204 angeordnet. Das heißt, die Wand 202 weist im Allgemeinen eine zylindrische Form auf. Es sollte jedoch klar sein, dass die Wand 202 nicht auf die in den Figuren gezeigte Form beschränkt ist und dass in Geist und Geltungsbereich der beanspruchten Erfindung andere Formen für die Wand 202 enthalten sind. Zum Beispiel ist die Wand 202 nicht auf eine bestimmte Höhe 206 beschränkt.

Das Gehäuse 200 beinhaltet aus der Wand 202 herausragende Vorsprünge 208 und 210. Die Vorsprünge sind gegenüber der Achse 204 versetzt. Zum Beispiel befinden sich die ersten oder Rückflächen 211 der Vorsprünge 208 und die zweiten oder Rückflächen 212 der Vorsprünge 210 nicht in derselben radialen Ebene bezüglich der Achse. Die vorliegende Erfindung ist nicht auf einen bestimmten axialen Versatz zwischen den Vorsprüngen beschränkt. Gemäß einigen Aspekten sind zumindest Teile der Vorsprünge 208 und 210 unter Winkeln 213 bzw. 214 gegenüber der rechtwinklig zur Achse 204 stehenden radialen Ebene ausgerichtet. Gemäß einigen Aspekten nähert sich die Fläche 216 dieser Ebene an. Die Vorsprünge sind so angeordnet, dass sie ein (nicht gezeigtes) Drehmomentübertragungselement in einer (nicht gezeigten) Kupplungsbaugruppe berühren. Gemäß einigen Aspekten dient ein äußeres Kupplungsgehäuse als Drehmomentübertragungselement.

Gemäß einigen Aspekten sind die Winkel 213 und 214 in verschiedene Richtungen geneigt. Zum Beispiel ist, wie Fig. 4 zeigt, ein Winkel positiv und der andere Winkel negativ zur Fläche 216 geneigt. Es sollte klar sein, die Begriffe positiv und negativ relativ sind. Zum Beispiel wird der Winkel 213 von der radialen Ebene in Fig. 4 aus nach links und der Winkel 214 von der Ebene in Fig. 4 aus nach rechts gemessen. Deshalb ist bei einer Ausrichtung der Winkel positiv und der Winkel 214 negativ gegenüber der Ebene geneigt. Bei einer anderen Ausrichtung sind die Winkel 213 und 214 umgekehrt geneigt. Mit anderen Worten, die Winkel 213 und 214 gehen von den entgegengesetzten Seiten einer zentralen Bezugsebene aus. Die Winkel 213 und 214 sind nicht auf eine bestimmte Größe beschränkt. Die Winkel 213 und 214 können dieselbe oder unterschiedliche Größen aufweisen.

Fig. 4A ist eine Teilseitenansicht des Kupplungsgehäuses 200 gemäß der vorliegenden Erfindung, die eine andere Ausrichtung der Vorsprünge zeigt. Die folgende Beschreibung ist in Verbindung mit den Figuren 3 bis 4A zu sehen. Gemäß einigen Aspekten sind die Vorsprünge auf derselben Seite einer radialen Ebene für das Gehäuse in radialer Richtung versetzt. Zum Beispiel befinden sich die Vorsprünge 208A und 210A auf derselben Seite der Fläche 216.

Gemäß einigen Aspekten beinhaltet das Gehäuse 200 in den Figuren 3 und 4 eine Vielzahl entsprechender Vorsprünge 208 und 210. Das Gehäuse 200 ist nicht auf eine bestimmte Anzahl Vorsprünge aus dieser Vielzahl beschränkt. Das Gehäuse 200 ist auch nicht auf ein bestimmtes Verhältnis zwischen den Vorsprüngen 208 und 210 beschränkt. Gemäß einigen Aspekten beinhaltet das Gehäuse 200 drei Vorsprünge 208. Gemäß einigen Aspekten beinhaltet das äußere Gehäuse eine Vielzahl Öffnungen mit Kanten, wobei die Vorsprünge 210 so angeordnet, dass sie mit den Kanten gekoppelt werden, um ein Drehmoment vom äußeren Kupplungsgehäuse aufzunehmen und das Kupplungsgehäuse 200 in axialer Richtung 217 zu stützen.

Gemäß einigen Aspekten beinhaltet die Baugruppe eine Hebelfeder, die Vielzahl Öffnungen umfasst andere Kanten, und der Vorsprung 208 ist so angeordnet, dass er mindestens einen Teil der Hebelfeder gegen die anderen Kanten drückt. Die Vorsprünge 208 sind so angeordnet, dass sie die Hebelfeder vorspannen. Es sollte klar sein, dass die Vorsprünge 208 auch ein Drehmoment vom Drehmomentübertragungselement aufnehmen können. Die Vorsprünge 208 und 210 sind in der Nähe des längsgerichteten Endes 220 des Gehäuses 200 angeordnet oder angebracht. Gemäß einigen Aspekten dienen als Vorsprünge entsprechende Zungen, die so angeordnet, dass sie in der Nähe des Endes 220 bezüglich der Achse 204 in radialer Richtung nach außen ragen. Gemäß einigen Aspekten beinhaltet das Ende 220 einen Flansch 222, aus dem die Zungen herausragen.

Die folgende Beschreibung ist in Verbindung mit den Figuren 1 bis 4 zu sehen. Gemäß einigen Aspekten sind die Gehäuse 100 oder 200 gestanzt, sodass die Fertigungskosten und die Komplexität verringert werden. Es sollte jedoch klar sein, dass zur Bildung der Gehäuse 100 und 200 andere Fertigungsverfahren angewendet werden können. Gemäß einigen Aspekten werden die Wände 102 und 202 nach dem Bildungsprozess durchlöchert, um die Öffnungen 104 bzw. die Öffnungen 224 und 226 zu erzeugen, sodass sich ein Profilwalzprozess und die damit verbundenen Komplexitäten und Kosten erübrigen. Da die Öffnungen erst nach dem Bildungsprozess hergestellt werden, werden außerdem auch mögliche Deformationen und Toleranzen verringert. Das Gehäuse 100 ist auch mit einer Lippe 128 gebildet, die dem Gehäuse 100 eine durchgehende Stütze bietet, insbesondere gegen Umfangsspannungen, denen das Gehäuse 100 während des Gebrauchs ausgesetzt ist. Der Flansch 222 erfüllt eine ähnliche Funktion im Gehäuse 200. Gemäß einigen Aspekten ermöglichen die Öffnungen in den Gehäusen 100 und 200 zusätzlich das Durchströmen einer Kühlflüssigkeit.

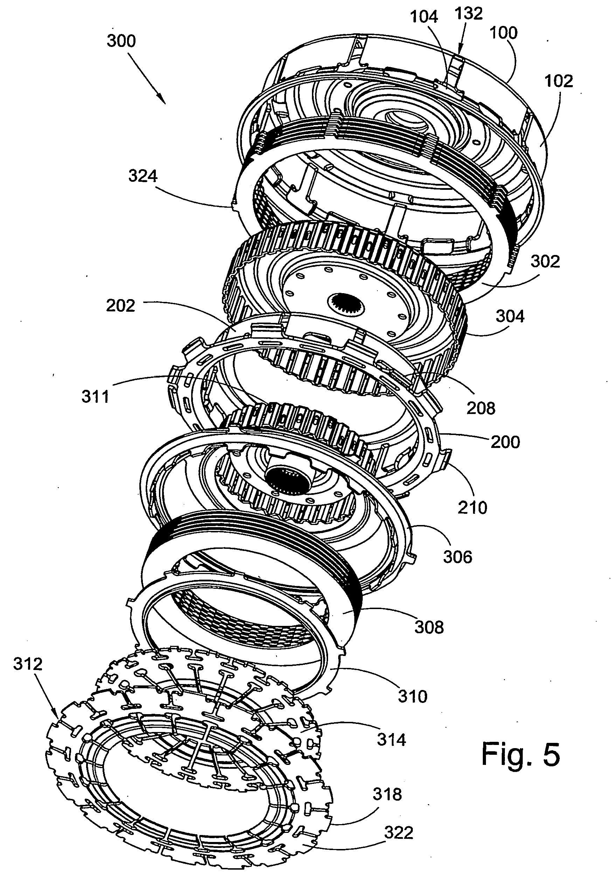

Fig. 5 ist eine Rückansicht einer Doppelkupplungsbaugruppe 300 gemäß der vorliegenden Erfindung in Explosionsdarstellung.

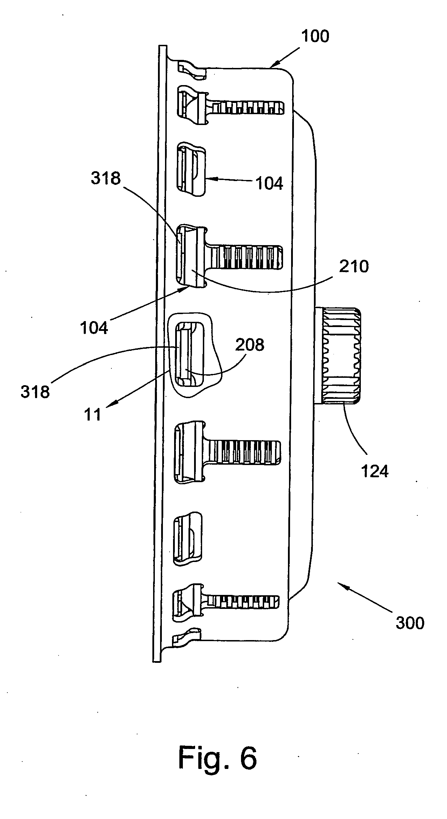

Fig. 6 ist eine Seitenansicht der Baugruppe 300 von Fig. 5.

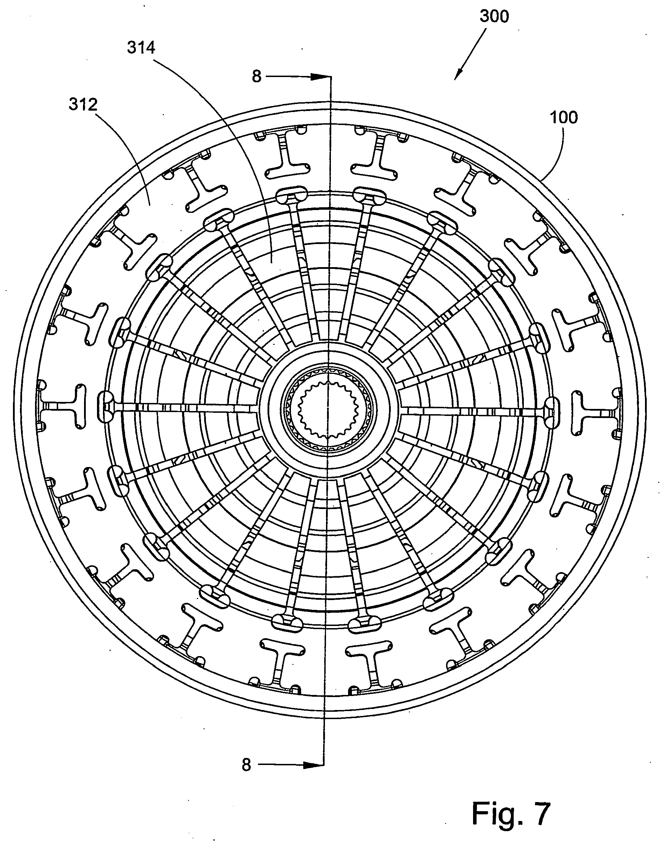

Fig. 7 ist eine Rückansicht der Baugruppe 300 von Fig. 5.

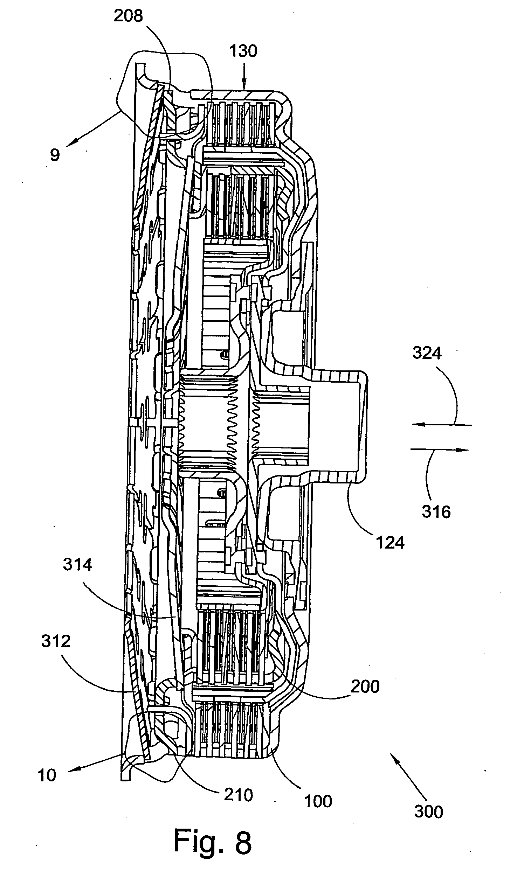

Fig. 8 ist eine Querschnittsansicht der Baugruppe 300 von Fig. 5 entlang der Schnittlinie 8-8 in Fig. 7. Die folgende Beschreibung ist in Verbindung mit den Figuren 1 bis 8 zu sehen. Die Baugruppe 300 beinhaltet die Gehäuse 100 und 200, und die Beschreibung der Gehäuse 100 und 200 in den Figuren 1 und 2 bzw. in den Figuren 3, 4 und 4A gilt auch für die Baugruppe 300. Das Gehäuse 100 stellt ein äußeres Kupplungsgehäuse und das Gehäuse 200 ein inneres Kupplungsgehäuse in der Baugruppe 300 dar. Die Erörterungen des inneren und des äußeren Gehäuses in den Beschreibungen der Figuren 1 bis 4A gelten auch für die Baugruppe 300.

Die Baugruppe 300 kann auf eine beliebige in der Technik bekannte Weise gebildet werden. Gemäß einigen Aspekten sind das Kupplungspaket 302, der Tragring 304 und Durchflusssperre/Stützring 306 in das Gehäuse 100 eingebaut. Das Kupplungspaket 308, der Stützring 310 und der Tragring 311 sind in das Gehäuse 200 eingebaut. Die Federscheiben 312 und 314 dienen dazu, die Kupplungspakete 302 bzw. 308 miteinander zu verbinden. Es sollte jedoch klar sein, dass die vorliegende Erfindung nicht auf die Verwendung der für die Baugruppe 300 gezeigten Anzahl, Art und Anordnung von Komponenten beschränkt ist, und bei der vorliegenden Erfindung andere Anzahlen, Arten und Anordnungen von Komponenten verwendet werden können. Das Gehäuse 200 beinhaltet Vorsprünge 208 und 210, die in radialer Richtung aus der im Wesentlichen zylindrischen Wand 202 herausragen. Das Kupplungsgehäuse 100 beinhaltet eine Vielzahl von Öffnungen 104 in der im Wesentlichen zylindrischen Wand 102. Die Vorsprünge 208 und 210 sind zumindest teilweise mit den Öffnungen 104 gekoppelt.

Gemäß einigen Aspekten sind die Federn 312 und 314 mit den Gehäusen 100 bzw. 200 gekoppelt, wie in der an denselben Anmelder abgetretenen US-Patentanmeldung mit dem Titel (Clutch Housing with Lever Spring Retention Slots and Method for Installing a Lever Spring" von Todd Sturgin und Adam Uhler, angemeldet am selben Tag wie die vorliegende Erfindung, beschrieben wird.

Es sollte klar sein, dass zum Verbinden des Kupplungspakets 302 mit dem Gehäuse 100 ein beliebiges in der Technik bekanntes Mittel verwendet werden kann, zum Beispiel einander ergänzende Keile und Kerben. Gemäß einigen Aspekten kann außerdem eine Anordnung von Zungen und Schlitzen verwendet werden, wie sie in der an denselben Anmelder abgetretenen US-Patentanmeldung mit dem Titel "Clutch Housing with Openings to Engage a Clutch Plate" von Sturgin et al. beschrieben wird, die am selben Tag wie die vorliegende Erfindung angemeldet wurde. Zum Beispiel werden die Zungen 324 des Kupplungspakets 302 mit den Schlitzen 132 im Gehäuse 100 gekoppelt.

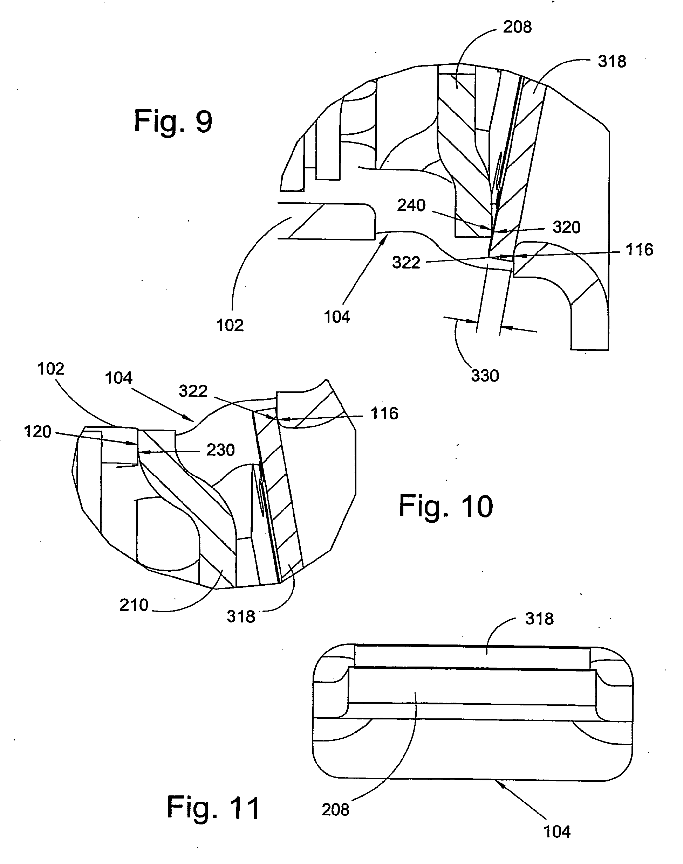

Fig. 9 ist ein Detail des Bereichs 9 in Fig. 8.

Fig. 10 ist ein Detail des Bereichs 10 in Fig. 8. Die folgende Beschreibung ist in Verbindung mit den Figuren 1 bis 10 zu sehen. Die Vorsprünge 208 passen auch in die Öffnungen 104 und drücken die Zungen 318 der Feder 312 gegen die Wand 102. Insbesondere liegen die ersten oder Rückflächen 240 der Vorsprünge an der Vorderfläche 320 der Federzungen an, welche die Rückfläche 322 der Federzungen gegen die Flächen 116 der Vorsprünge drücken. Durch das Aneinanderdrücken der Flächen 322 und 116 wird die Feder 312 vorgespannt. Aufgrund der der Feder 312 innewohnenden Spannung brauchen nicht alle Zungen 318 gegen die Vorsprünge 208 gedrückt zu werden, damit alle Zungen 318 an den Flächen 116 anliegen. Das heißt, indem eine begrenzte Anzahl Zungen 318 gegen die Flächen 116 mit den Vorsprüngen 208 gedrückt wird, werden die übrigen (nicht an den Vorsprüngen 208 anliegenden) Zungen ebenfalls gegen die Flächen 116 gedrückt. Zum Beispiel liegen die Flächen 116 und 322 in Fig. 10 aneinander. Im Allgemeinen stellen die Vorsprünge 208 nur eine geringe Anzahl der aus dem Ende 220 herausragenden Vorsprünge dar, jedoch sollte klar sein, dass als Vorsprünge 208 eine beliebige Anzahl von Vorsprüngen im Gehäuse 200 infrage kommen.

Fig. 11 ist ein Detail einer Fläche 11 in Fig. 6. Die folgende Beschreibung ist in Verbindung mit den Figuren 1 bis 11 zu sehen. Die Vorsprünge 210 passen in die Öffnungen 104. Die zweiten oder Vorderflächen 230 der Vorsprünge 210 liegen an den Flächen 120 des Gehäuses 100 an. Dadurch, dass die Vorderflächen an den Flächen 120 anliegen, wird das Gehäuse 200 insbesondere in der axialen Richtung 316 gestützt oder stabilisiert. Das heißt, das Gehäuse 200 kann sich aufgrund der aneinanderliegenden Flächen nicht weiter in Richtung 316 verschieben. Die Vorsprünge 210, insbesondere die Kanten 232 und 234 sind so angeordnet, dass sie ein Drehmoment vom Gehäuse 100 aufnehmen und dieses Drehmoment an das Gehäuse 200 übertragen. Das heißt, während sich das Gehäuse 100 dreht, liegen je nach Drehrichtung die Kanten 132 und 134 an den Kanten 232 bzw. 234 an. Wenn das Kupplungspaket 308 eingekuppelt ist, wird dieses Drehmoment an den Tragring 311 übertragen. Die meisten der aus dem Ende 220 herausragenden Vorsprünge sind im Allgemeinen Vorsprünge 210. Es sollte jedoch klar sein, dass eine beliebige Anzahl Vorsprünge im Gehäuse 200 Vorsprünge 210 können. Ferner sollte klar sein, dass die Vorsprünge 208 ein Drehmoment vom Gehäuse 100 aufnehmen können.

Durch den Versatz 250 zwischen den Flächen 230 und 240 kann die Breite 108 der Öffnungen 104 auf vorteilhafte Weise vergrößert werden, indem die Breite 108 zum Beispiel größer als die Dicke 130 der Wand 102 gewählt wird. Zum Beispiel brauchen nicht beide Flächen 116 und 120 direkt an den Flächen 320 und 322 der Feder 312 anzuliegen. Das heißt, die Breite 108 braucht nicht unbedingt im Wesentlichen gleich der Dicke 330 der Zungen 318 zu sein. Stattdessen stellt die Breite 108 eine Kombination aus Versatz 250 zuzüglich der Dicke 330 dar. Wenn die Breite 108 vergrößert wird, kann zur Bildung der Öffnungen 104 ein stabilerer Stanzstempel eingesetzt werden.

Es sollte klar sein, dass zum Justieren der in den Figuren gezeigten Kupplungsbaugruppen beliebige in der Technik bekannte Mittel verwendet werden können.

Somit wird deutlich, dass die vorhergehende Beschreibung zur Veranschaulichung der vorliegenden Erfindung dient und nicht als Einschränkung zu verstehen ist. Deshalb sind andere Ausführungsarten der vorliegenden Erfindung möglich, ohne vom Geltungsbereich der vorliegenden Erfindung abzuweichen wie er durch die Ansprüche festgelegt ist.

## Patentansprüche

1. Kupplungsbaugruppe (300), die Folgendes umfasst:
ein inneres Kupplungsgehäuse (200) mit ersten und zweiten Vorsprüngen (208, 208A, 210, 210A), die aus einer im Wesentlichen zylindrischen inneren Gehäusewand (202) in radialer Richtung herausragen und in axialer Richtung gegeneinander versetzt sind; und
ein äußeres Kupplungsgehäuse (100) mit einer Vielzahl von Öffnungen (104) in einer im Wesentlichen zylindrischen äußeren Gehäusewand (102), **dadurch gekennzeichnet, dass** die ersten und zweiten Vorsprünge (208, 208A, 210, 210A) zumindest teilweise mit der Vielzahl von Öffnungen (104) gekoppelt sind.

2. Baugruppe nach Anspruch 1, die ferner Folgendes umfasst: eine mit der Vielzahl von Öffnungen (104) gekoppelte Hebelfeder (312); und
wobei die Vielzahl von Öffnungen (104) ferner entsprechende erste Kanten (116) umfassen und der erste Vorsprung (208, 208A) die Feder (312) gegen die ersten Kanten (116) drückt.

3. Baugruppe nach Anspruch 2, bei der der erste Vorsprung (208, 208A) so angeordnet ist, dass er die Hebelfeder (312) vorspannt.

4. Baugruppe nach Anspruch 2, bei der der erste Vorsprung (208, 208A) so angeordnet ist, dass er ein Drehmoment aufnimmt.

5. Baugruppe nach Anspruch 2, bei der die Vielzahl von Öffnungen (104) ferner entsprechende zweite Kanten (120) umfasst und der zweite Vorsprung (210, 210A) so angeordnet ist, dass er die zweiten Kanten (120) berührt.

6. Baugruppe nach Anspruch 5, bei der das äußere Kupplungsgehäuse (100) so angeordnet ist, dass es ein Drehmoment aufnimmt, und bei der der zweite Vorsprung (210, 210A) so angeordnet ist, dass er das Drehmoment aufnimmt und das innere Kupplungsgehäuse (200) in einer axialen Richtung stützt.

7. Baugruppe nach Anspruch 1, bei der die erste und die zweite Kante 116, 120 in axialer Richtung gegeneinander versetzt sind.

8. Baugruppe nach Anspruch 1, bei das innere Kupplungsgehäuse (200) ferner ein längsgerichtetes Ende (220) umfasst und als erste und zweite Vorsprünge (208, 210) erste bzw. zweite Zungen dienen, die in der Nähe des längsgerichteten Endes angeordnet sind.

9. Baugruppe nach Anspruch 1, bei dem die ersten und zweiten Vorsprünge (208, 210) jeweils eine Vielzahl der ersten und zweiten Vorsprünge umfassen.

## Claims

1. Clutch assembly (300) which comprises the following:
an inner clutch housing (200) with first and second projections (208, 208A, 210, 210A) which protrude out of a substantially cylindrical inner housing wall (202) in the radial direction and are offset with respect to one another in the axial direction; and
an outer clutch housing (100) with a multiplicity of openings (104) in a substantially cylindrical outer housing wall (102), **characterized in that** the first and second projections (208, 208A, 210, 210A) are coupled at least partially to the multiplicity of openings (104).

2. Assembly according to Claim 1, which comprises, furthermore, the following: a lever spring (312) which is coupled to the multiplicity of openings (104); and
the multiplicity of openings (104) comprising, furthermore, corresponding first edges (116), and the first projection (208, 208A) pressing the spring (312) against the first edges (116).

3. Assembly according to Claim 2, in which the first projection (208, 208A) is arranged in such a way that it prestresses the lever spring (312).

4. Assembly according to Claim 2, in which the first projection (208, 208A) is arranged in such a way that it absorbs a torque.

5. Assembly according to Claim 2, in which the multiplicity of openings (104) comprise, furthermore, corresponding second edges (120) and the second projection (210, 210A) is arranged in such a way that it makes contact with the second edges (120).

6. Assembly according to Claim 5, in which the outer clutch housing (100) is arranged in such a way that it absorbs a torque, and in which the second projection (210, 210A) is arranged in such a way that it absorbs the torque and supports the inner clutch housing (200) in an axial direction.

7. Assembly according to Claim 1, in which the first and the second edge (116, 120) are offset with respect to one another in the axial direction.

8. Assembly according to Claim 1, in which the inner clutch housing (200) comprises, furthermore, a lengthwise end (220), and first and second tongues which are arranged in the vicinity of the lengthwise end serve as first and second projections (208, 210).

9. Assembly according to Claim 1, in which the first and second projections (208, 210) in each case comprise a multiplicity of first and second projections.

## Revendications

1. Ensemble d'embrayage (300), qui comprend:
- un carter d'embrayage intérieur (200) avec des premières et des deuxièmes saillies (208, 208A, 210, 210A), qui sont saillantes en direction radiale à partir d'une paroi de carter intérieure essentiellement cylindrique (202) et qui sont décalées les unes par rapport aux autres en direction axiale; et
- un carter d'embrayage extérieur (100) avec une pluralité d'ouvertures (104) dans une paroi de carter extérieure essentiellement cylindrique (102),
**caractérisé en ce que** les premières et les deuxièmes saillies (208, 208A, 210, 210A) sont couplées au moins partiellement avec la pluralité d'ouvertures (104).

2. Ensemble selon la revendication 1, qui comprend en outre un ressort levier (312) couplé à la pluralité d'ouvertures (104); et dans lequel la pluralité d'ouvertures (104) comprennent en outre des premières arêtes correspondantes (116) et la première saillie (208, 208A) presse le ressort (312) contre les premières arêtes (116).

3. Ensemble selon la revendication 2, dans lequel la première saillie (208, 208A) est disposée de façon à précontraindre le ressort levier (312).

4. Ensemble selon la revendication 2, dans lequel la première saillie (208, 208A) est disposée de façon à reprendre un couple de rotation.

5. Ensemble selon la revendication 2, dans lequel la pluralité d'ouvertures (104) comprennent en outre des deuxièmes arêtes correspondantes (120) et la deuxième saillie (210, 210A) est disposée de façon à toucher les deuxièmes arêtes (120).

6. Ensemble selon la revendication 5, dans lequel le carter d'embrayage extérieur (100) est disposé de façon à reprendre un couple de rotation, et dans lequel la deuxième saillie (210, 210A) est disposée de façon à reprendre le couple de rotation et à supporter le carter d'embrayage intérieur (200) dans une direction axiale.

7. Ensemble selon la revendication 1, dans lequel la première et la deuxième arêtes (116, 120) sont décalées l'une par rapport à l'autre en direction axiale.

8. Ensemble selon la revendication 1, dans lequel le carter d'embrayage intérieur (200) comprend en outre une extrémité (220) orientée longitudinalement et des premières et des deuxièmes languettes, qui sont disposées à proximité de l'extrémité orientée longitudinalement, font office de premières et de deuxièmes saillies (208, 210).

9. Ensemble selon la revendication 1, dans lequel les premières et les deuxièmes saillies (208, 210) comprennent chaque fois une pluralité des premières et des deuxièmes saillies.
